Europäisches Patentamt

**European Patent Office**

Office européen des brevets

(19)

(11) Publication number : **0 410 703 B1**

## (12) EUROPEAN PATENT SPECIFICATION

(45) Date of publication of patent specification :
**18.10.95 Bulletin 95/42**

(51) Int. Cl.⁶ : **H04N 1/028,** H04N 1/10

(21) Application number : **90308107.3**

(22) Date of filing : **24.07.90**

(54) **Image scanning apparatus.**

(30) Priority : **25.07.89 JP 192059/89**
**27.07.89 JP 194561/89**
**26.09.89 JP 249512/89**
**27.10.89 JP 281531/89**
**27.10.89 JP 281532/89**
**20.02.90 JP 15843/90**

(43) Date of publication of application :
**30.01.91 Bulletin 91/05**

(45) Publication of the grant of the patent :
**18.10.95 Bulletin 95/42**

(84) Designated Contracting States :
**DE FR GB**

(56) References cited :
**EP-A- 0 297 591**
**GB-A- 2 196 207**
**US-A- 4 656 525**
**PATENT ABSTRACTS OF JAPAN vol.13, no.58
(E-714) 01 April 1987; & JP A 63 246965
(MINOLTA CAMERA CO. LTD.) 13 October
1988.**

(73) Proprietor : **VICTOR COMPANY OF JAPAN,
LTD.**
**12, Moriya-Cho 3-Chome,**
**Kanagawa-Ku**
**Yokohama-Shi, Kanagawa-Ken (JP)**

(72) Inventor : **Iwahara, Makoto**
**11-20-40-701 Dai-Machi,**
**Kanagawa-ku**
**Yokohama-shi, Kanagawa-Ken (JP)**
Inventor : **Miyoshi,Tadayoshi**
**1-405,Shiiai-Mansion-Miurakaigan**
**3100, Minami-Shimouracho-Kamimiyada**
**Miura-Shi, Kanagawa-Ken (JP)**
Inventor : **Tada, Shigeaki**
**8-401 Wakamiya Heights,**
**760-1 Yamashita**
**Hiratusuka-Shi, Kanagawa-Ken (JP)**
Inventor : **Kuriyama, Takashi**
**201 Sunheights Kawahara,**
**1252-8 Yabe-Cho**
**Totsuka-Ku, Yokohama-Shi, Kanagawa-Ken
(JP)**
Inventor : **Takanashi, Itsuo**
**3-7-12 Oomachi**
**Kamakura-Shi, Kanagawa-Ken (JP)**
Inventor : **Shishido, Ichiro**
**1-7-7-306 Sengen-Cho,**
**Nishi-Ku**
**Yokohama-Shi, Kanagawa-Ken (JP)**
Inventor : **Kitami, Kaoru, I-201,**
**Shintsu-Heights**
**204-1, Hirakata-Hara-Shinden**
**Nagareyama-Shi, Chiba-Ken (JP)**

(74) Representative : **Dawson, Elizabeth Ann et al**
**A.A. THORNTON & CO.**
**Northumberland House**
**303-306 High Holborn**
**London WC1V 7LE (GB)**

EP 0 410 703 B1

## Description

The present invention relates to an apparatus for reading images such as photographs, pictures and symbols, and more particularly, to an image scanning apparatus that can use light penetrating an original or reflected light from an original to read originals of differing size and that are the object of reading.

In general, the originals that are scanned by image scanning apparatus are large in size, such as drawings that are printed on paper, and there are various sizes down to small sizes such as 16-millimeter film. When image information printed on paper such as memorandum and document paper or the like is scanned, the image that is to be scanned is irradiated with light and the light that is reflected from the image is collected and reading is performed. In addition, when an image is written on a material such as photographic film which is light-transmissive, the light is made to pass through the original which is to be read, and the transmitted light is collected to perform reading.

In this manner, image reading apparatus that performs reading of an image by using the reflected light that is reflected by, or the light that is transmitted through the original is known as having a reflecting mirror that sends the light that is irradiated from a light source and transmitted through the original or the light that is reflected from the original, an image forming lens and an image sensor to which the light that passes the image forming lens is irradiated.

In general, there are many cases where large-sized originals have their images read by using reflected light and there are many cases where originals for which the penetrating light is used to read the image are small in size. Because of this, an original platen on which an original having its image read by using reflected light is placed, is generally provided on an upper surface of the body casing of the main unit of the image scanning apparatus. In addition, an original platen on which an original having its image to be read by using transmitted light is usually internally incorporated into the body casing of the main unit. In an image scanning apparatus having such a structure, there must be a light source in order to generate reflected light or a light source to generate the penetrating light. In addition, the optical system to irradiate the reflected light onto the image sensor and an optical system to irradiate the penetrating light onto the image sensor must also be provided. Because of this, the structure of the apparatus not only becomes complex but the size of the entire apparatus also becomes large. Moreover, it is also necessary to have a powerful light source when the penetrating light is to be used to read an image, and this necessitates a large light source and also causes the problem of dissipating the heat generated. Furthermore, when an image is to be read by changing the magnification ratio, it is necessary to move the reflecting mirror that is disposed in the optical system. When this is done, it is necessary to consider the interference of the two optical systems when the reflecting mirror is moved.

Accordingly, in an apparatus that reads images using the light that is either transmitted through an original or reflected by it, and object of the present invention is to provide an image scanning apparatus which has a simplified structure and is compact overall.

In addition, another object of the present invention is to provide an image scanning apparatus that has a compact light source and a small amount of generated heat.

Still another object of the present invention is to provide an image scanning apparatus that has no interference between the two optical systems.

US-A-4870294 discloses an apparatus for scanning an image, including a main unit body casing, a first original platen disposed at the top of the main unit body casing upon which an original may be placed, a light source that irradiates light to said platen, an image sensor means disposed inside the body casing, and optical means for passing light from the original placed on said original platen to the image sensor.

A first aspect of the present invention provides image scanning apparatus characterised in that it further comprises a second original platen on which an original may be placed; the top surface of the main body unit casing is provided with a slit, said first original platen being disposed so as to be movable in a horizontal direction perpendicular to said slit, said second original platen being disposed so as to be movable in a horizontal direction inside said main unit body casing to a position between said second irradiating means and said third reflecting mirror;

the first irradiation means is disposed to irradiate light onto an original on said first original platen via said slit and said second irradiation means is disposed to irradiate light in a downward direction towards the second original platen;

the optical means is arranged to pass reflected light from an original on the first original platen or transmitted light from an original on the second original platen to said image sensor;

the first reflecting mirror is mounted to one end of the second original platen;

the second reflecting mirror is provided with removing means so as to be movable with respect to the first reflecting mirror between a position removed from the first optical path and a position on said first optical path; and

the third reflecting mirror is arranged to additionally reflect transmitted light from an original placed on said second original platen into said second optical path.

The invention also provides an apparatus for scanning an image including a main unit body casing, a first original platen upon which an original may be placed, a light source that irradiates light to said platen, an image sensor disposed inside the body casing and an optical means for passing light from the original placed on said original platen to the image sensor, wherein:

said main unit body casing is provided with a transparent surface through which light can pass, said first original platen is formed on said transparent surface of the main unit body casing, said light source comprises a first light source disposed inside the main unit body casing and so as to irradiate light through said transparent surface, onto the original placed on the first original platen, a second light source that irradiates light downwards in the direction of the original said optical means respectively passing reflected light from the original and light transmitted through the original to said image sensor, and said optical means comprises a first optical means disposed inside the main unit body casing to irradiate light reflected from the original placed on the first original platen, to said image sensing means; characterised in that:

the apparatus further comprises a second original platen upon which an original may be placed, said second original platen being disposed so as to be movable in a horizontal direction inside the main body unit casing, the second light source being disposed inside the main body unit casing so as to irradiate light towards the second original platen;

a second optical means disposed inside the main unit body casing, to irradiate light transmitted through the original placed on the second original platen, to said image sensor; and

optical path blocking means to block an optical path inside said first optical means, whereby when light transmitted through an original placed on the second original platen is emitted by said second optical means to said image sensor, the first optical path formed by said first optical means is changed by the optical path blocking means so as to block incursion of the first optical path into the second optical path.

In addition, the apparatus of the present invention preferably has light converging means that collects the light from the light source and irradiates it in the direction of the original platen.

Embodiments of the invention will now be described by way of example only and with reference to the accompanying drawings of which:

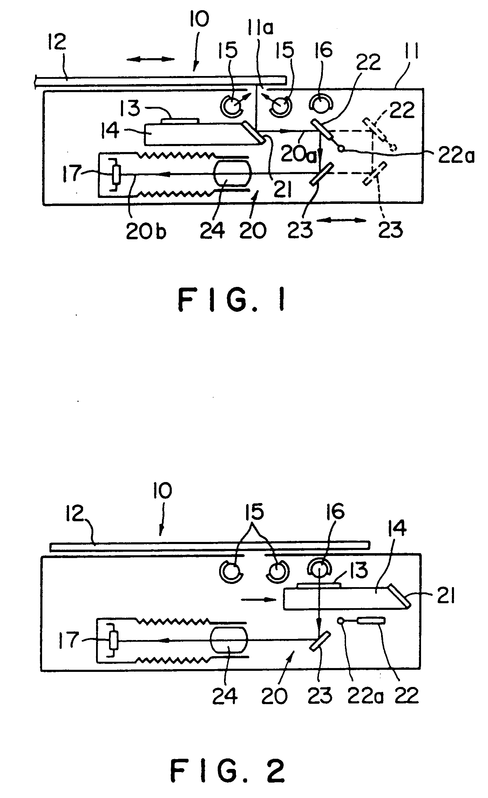

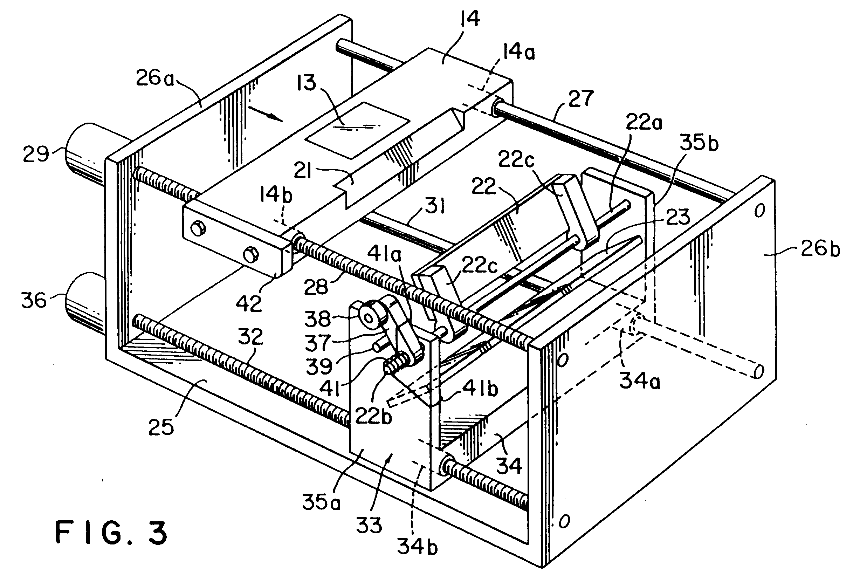

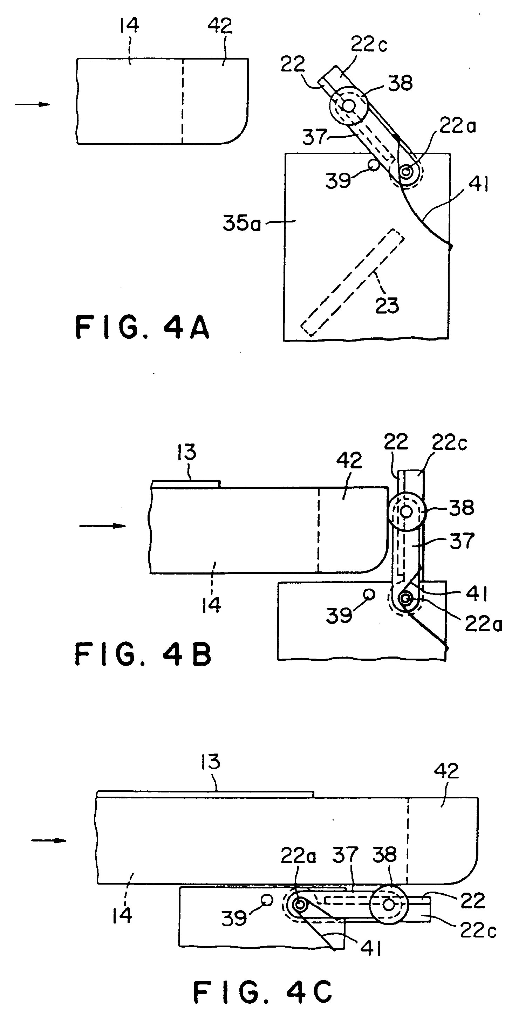

Figure 1 through Figure 3 are diagrams indicating a first embodiment of the apparatus according to the present invention, with Figure 1 and Figure 2 being outline longitudinal sectional drawings, and Figure 3 being a perspective view indicating one example of the drive mechanism of an optical system, and the second original platen, and Figure 4A, 4B and 4C being partial enlargements indicating the mechanism shown in Figure 3.

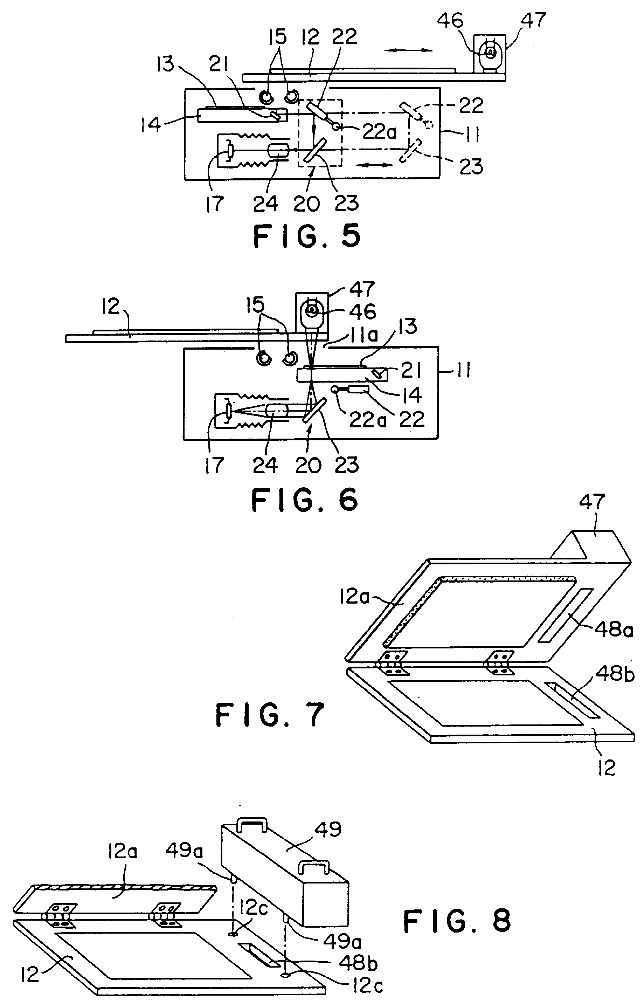

Figure 5 through Figure 8 are diagrams indicating a second embodiment of the apparatus according to the present invention, with Figure 5 and Figure 6 being outline longitudinal sections and Figure 7 and Figure 8 being perspective views for describing the light source mounted to the first original platen.

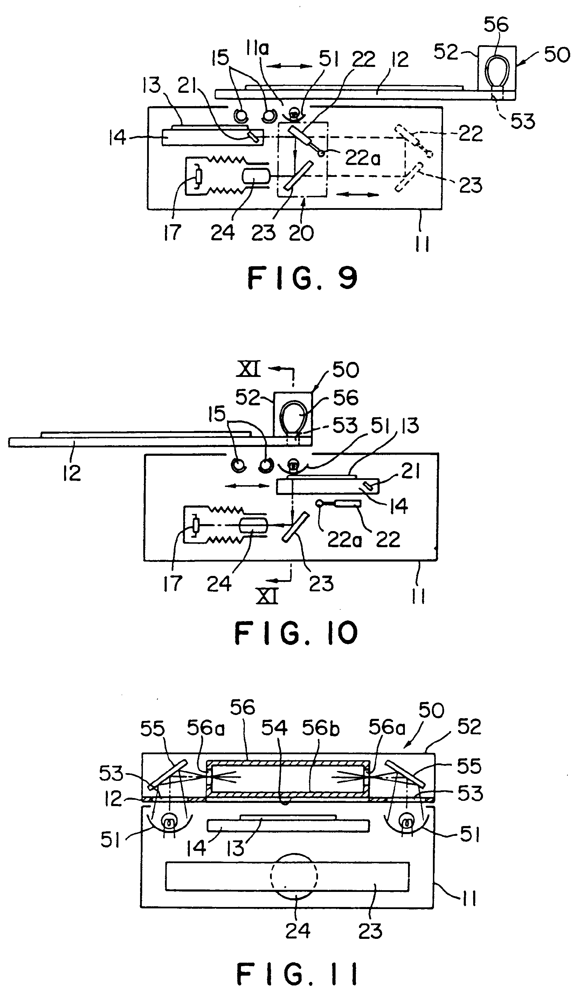

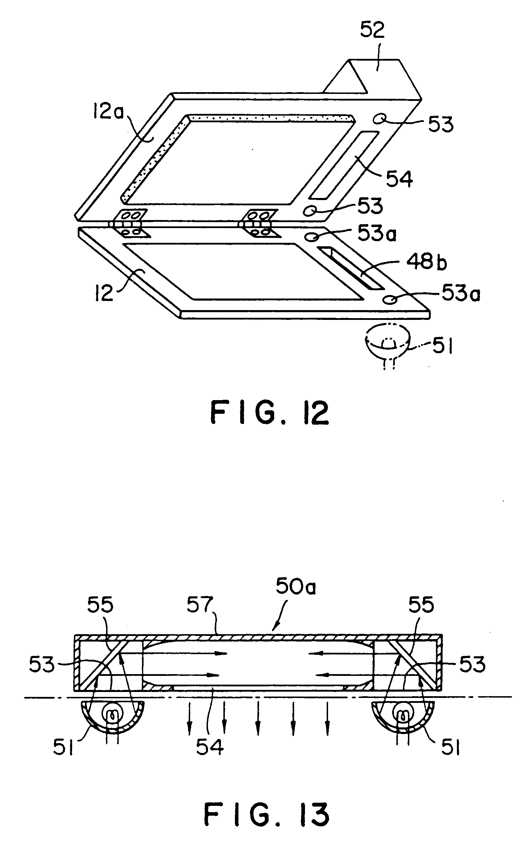

FIG. 9 through FIG. 12 are views indicating a third embodiment of the apparatus according to the present invention, with FIG. 9 and FIG. 10 being outline longitudinal sections, FIG. 11 being a sectional drawing along XI-XI of FIG. 10, FIG. 12 being a perspective view for describing the structure of the first original platen, and FIG. 13 through FIG. 16 being longitudinal sectional drawings indicating modifications of the light converging means.

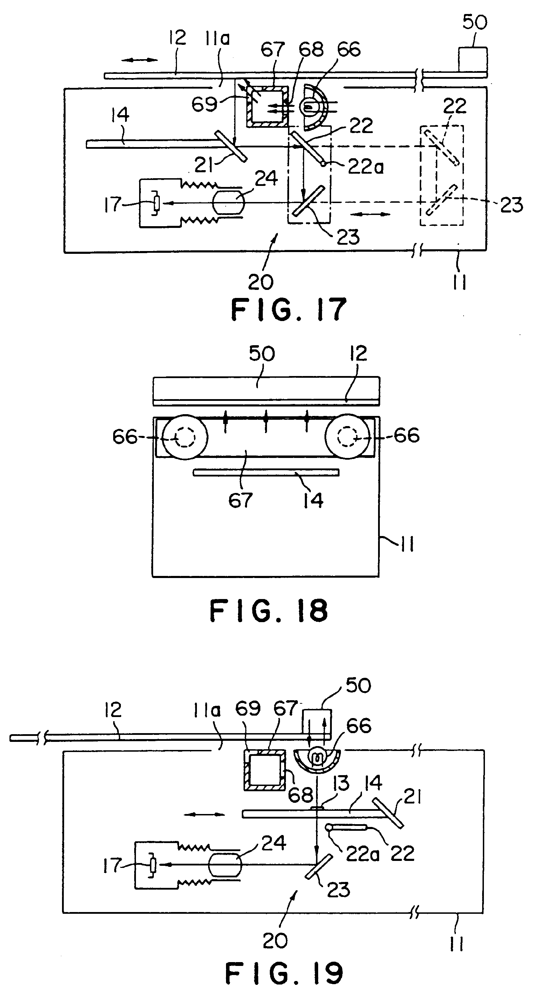

FIG. 17 through FIG. 19 are diagrams indicating a fourth embodiment of the apparatus according to the present invention, with FIG. 17 and FIG. 19 being outline longitudinal sectional drawings and FIG. 18 being an outline drawing for describing the position of the light source.

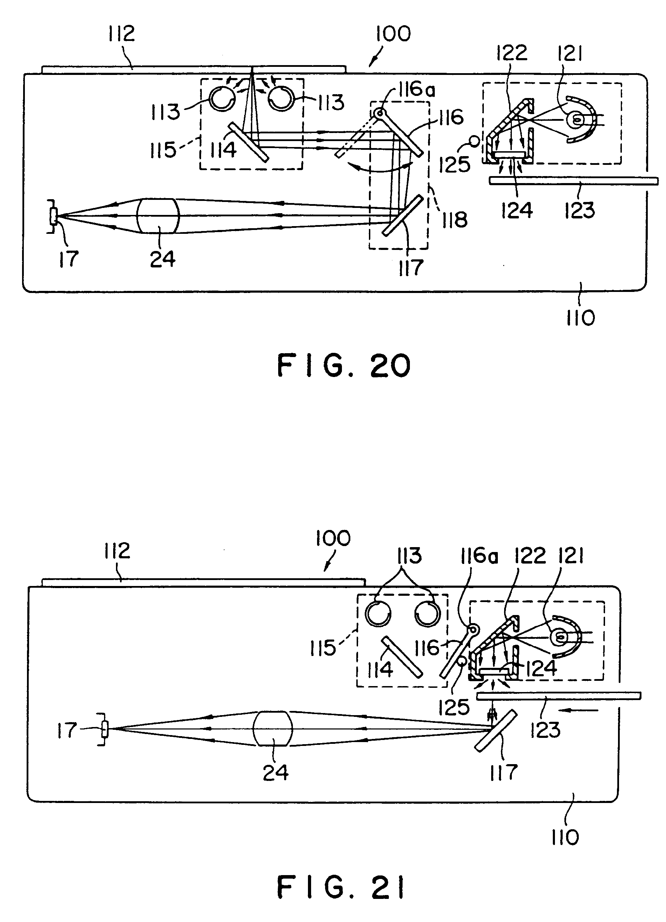

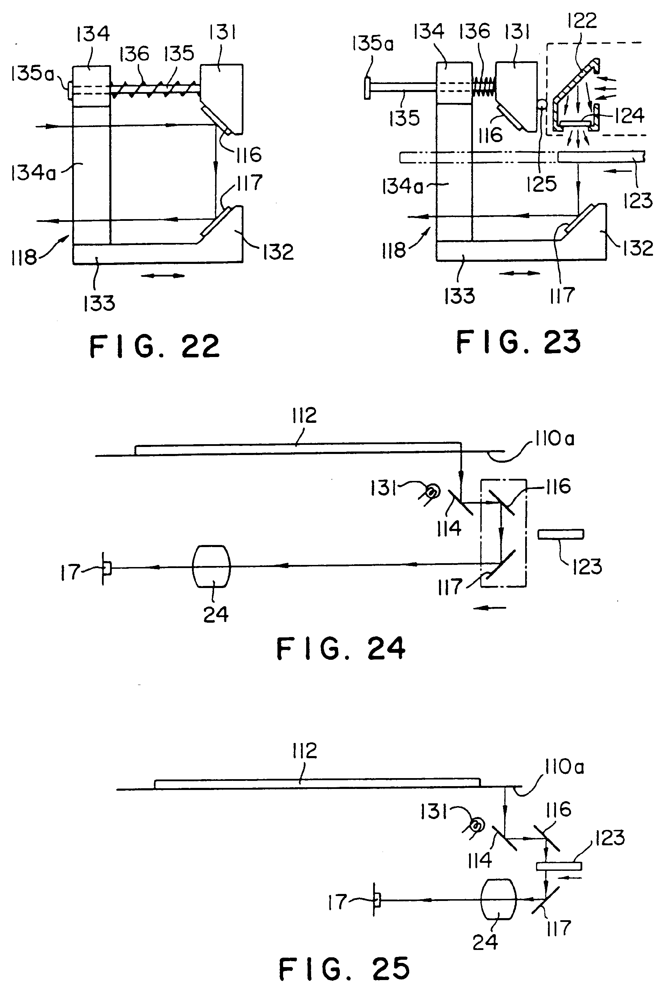

FIG. 20 through FIG. 23 are drawings indicating a fifth embodiment of the apparatus according to the present invention, with FIG. 20 and FIG. 21 being outline longitudinal sectional drawings, and FIG. 22 and FIG. 23 being longitudinal sectional drawings indicating the structure of a unit for holding the second and third reflecting mirrors.

FIG. 24 and FIG. 25 are outline structural drawings indicating a sixth embodiment of the apparatus according to the present invention.

FIG. 1 through FIG. 3 indicate a first embodiment of the present invention. An image scanning apparatus 10 has a box-shaped body casing for the main unit. The top surface of this body casing 11 is formed with a slit 11a through which light passes. To the top surface of this body casing 11 is mounted a first original platen 12 that is transparent and moves horizontally so as to cross the slit 11a. On the first original platen 12 is placed an original on which is drawn the image to be read.

Inside the body casing 11 is mounted a transparent, second original platen 14 upon which an original of a light-transmissive material and on which is drawn the image to read is placed. This second original platen 14 is movable horizontally in the same manner as the first original platen 12. Inside the body casing 11 at a position above the second original platen 14 is disposed a first light source 15 and a second light source 16. The first light source 15 irradiates light in the direction of the first original platen 12 and is fixed in disposition close to the slit 11a and in the direction of the slit 11a.

The second light source 16 irradiates light in the downward direction in the direction of the second original platen 14 and is fixed in disposition facing downwards.

To the side at one end towards the bottom of the body casing 11 is disposed an image sensor 17 that scans the image.

The light that is irradiated from the first light source 15 in the direction of the first original platen 12 is irradiated to the original mounted on the first original platen 12 and is reflected back. This reflected light passes through the optical path formed by the optical means 20 which is to be described below, and is irradiated to the image sensor 17. In addition, the light that is irradiated from the second light source 16 and in the direction of the second original platen 14 is transmitted through the light-penetrable original 13 placed on the second original platen 14, passes through the optical path formed in the same manner by the optical means 20 and is irradiated to the image sensor 17.

The optical means 20 is disposed inside the body casing 11 and has a first reflecting mirror 21 that reflects the reflected light from the original placed on the first original platen 12, into a first optical path 20a parallel to the surface of the first original platen 12 upon which the original is placed. In this embodiment, this first reflecting mirror 21 is mounted at one end of the second original platen 14.

The first optical path 20a extends from the first reflecting mirror 21 to a second reflecting mirror 22 that reflects the reflected light from the first reflecting mirror 21, in the direction perpendicular to the first optical path 20a. This second reflecting mirror 22 is linked to a swinging shaft 22a so that it can be swung around the pivot of the swinging shaft 22a, between a position on a first optical path 20a and a position removed from the first optical path 20a.

At a position opposing the second reflecting mirror 22 and on the side below the second reflecting mirror 22 is disposed a third reflecting mirror 23 that reflects the reflected light from the second reflecting mirror 22 into a second optical path 20b that extends in the direction opposite to and parallel to the first optical path 20a.

In the second optical path 20b between the third reflecting mirror 23 and the image sensor 17 is disposed a convergence lens 24 that converges the reflected light.

The optical means 20 is configured from the above described first reflecting mirror 21, second reflecting mirror 22, third reflecting mirror 23 and the convergence lens 24.

As has been described above, the second original platen 14 can move horizontally. In addition, the second reflecting mirror 22 and the third reflecting mirror 23 can move horizontally together in order to adjust the magnification ratio of the image that is to be scanned. FIG. 3 is a perspective view indicating an embodiment of a mechanism for this horizontal movement.

The pair of side plates 26a and 26b that are provided vertically and parallel to each other are mutually linked by a bottom plate at their lower ends. The pair of side plates 26a and 26b are linked at a position towards their tops, by a horizontal guide bar 27. Parallel to this guide bar is disposed at the same height a screw bar 28 so as to be freely rotatable, with both of its ends being supported by the pair of side plates 26a and 26b.

This horizontal guide bar 27 and screw bar 28 both pierce both of the end portions of the second original platen 14. This is to say that the horizontal guide bar 27 is slidably inserted into the through hole 14a, and the screw bar 28 is in engagement with the screw bar 14b formed in the other end of the second original platen 14.

One end of the screw bar 28 is linked to a motor 29 that is mounted to the side plate 26a and is rotatably driven by the motor 29.

To lower positions of the pair of side plates 26a and 26b there is a guide bar 31 which is linked parallel to and horizontally, with the horizontal guide bar 27. In addition, parallel to this guide bar 31 is disposed at the same height a screw bar 32 so as to be freely rotatable, with both of its ends being supported by the pair of side plates 26a and 26b.

To this guide bar 31 and screw bar 32 is mounted a reflecting mirror support member 33 which supports the second reflecting mirror 22 and third reflecting mirror 23. The reflecting mirror support member 33 has a pair of parallel side plates 35a and 35b which are fixed upright at both ends of the base plate 34. The guide bar 31 slidably pierces the through hole 34a formed at one end of the base plate 34. In addition, the screw bar 32 is in engagement with a screw hole 34b formed at the other end of the base plate 34.

One end of the screw bar 32 is rotatably movable by a motor 36 mounted to the side plate 26a.

The pair of side plates 35a and 35b of the reflecting mirror support member 33 support both ends of a swinging shaft 22a so that it is rotatably movable. To this swinging shaft 22a is fixed a pair of support members 22C in the direction perpendicular to the swinging shaft 22a. The second reflecting mirror 22 is mounted to this pair of support members 22c.

One end of the swinging shaft 22a pierces and protrudes through the side plate 35a. This protruding portion 22b has one end of a lever 37 mounted perpendicularly to it, and at the other end of this lever 37 is mounted a roller 38 which is rotatable. To the side plate 35a is fixed a stopper 39 in the same direction as the protruding portion 22b of the swinging shaft 22a. This stopper 39 is to stop the rotation of the lever 37 and the second reflecting mirror 22 is positioned on the first optical path 20a when the lever 37 is in contact with this stopper 39. The protruding portion 22b of the swinging shaft 22a is fitted with a coil spring 41 and one end 41a of this coil spring 41 is connected to the lever 37 and the other end 41b is connected to the side plate 35a. By fitting the coil spring in this manner, the lever 37 is normally urged to press the stopper 39.

To the front of the other end of the second original platen 14 is fixed a plate 42 which protrudes.

Both of the ends of the third reflecting mirror 23 are fixed to this pair of side plates 35a and 35b of the reflecting mirror support member 33.

The following is a description of the image scanning operation of the image scanning apparatus according to this embodiment.

The first part of the description will describe the operation for the irradiation of light to the original and the scanning of the image. In this case, then as indicated in FIG. 1, the the second original platen 14 is moved towards the rear (the left, as indicated in FIG. 1), and the first reflecting mirror 21 is fixed at a position where it is directly beneath the slit 11a of the body casing 11. The motor 36 rotates and the rotation of the screw bar 32 causes the reflecting mirror support member 33 to move along the guide bar 31 and to move the second reflecting mirror 22 and third reflecting mirror 23 to a position of a predetermined image magnification ratio.

The original is placed on the first original platen 12 so that its image faces downwards. The light from the first light source 15 is irradiated to it and the first original platen 12 crosses the slit 11a and moves in the horizontal direction.

The light from the first light source 15 is irradiated to the original and reflected by it. This reflected light is reflected to the first reflecting mirror 21, second reflecting mirror 22 and third reflecting mirror 23, passes through the convergence lens 24 and is irradiated to the image sensor 17. The image sensor 17 scans the image by this reflected light.

The following is a description of the operation when an image drawn on material which is light-transmissive is scanned. In this case, the motor 29 is driven and the screw bar 28 rotates so that the second original platen 14 on which a light-transmissive original is placed is moved to a position between the second light source 16 and the third reflecting mirror 23, as shown in FIG. 2.

By this movement of the second original platen 14, the plate 42 fixed to the second original platen 14 is in contact with the roller 38 and the second reflecting mirror 22 is swung to a position removed from the first optical path 20a.

FIG. 4A through FIG. 4C are views for describing this swinging operation. This is to say that normally, when the coil spring 41 presses the lever 37 against the stopper 39 and the second reflecting mirror 22 is on the first optical path 20a (FIG. 4A). The second original platen 14 moves and the plate 42 is in contact with the roller 38, then the lever 37 resists the force of the coil spring 41, separates from the stopper 39 and starts to rotate (FIG. 4B). When the second original platen 14 moves further in the forward direction (towards the right) and reaches a predetermined stop position, the lever 37 rotates to a position in an approximately horizontal direction and the second reflecting mirror 22 is completely removed from the first optical path 20a (FIG. 4C).

To the light-transmissive original 13 is placed on the second original platen 14 which has moved forward to this position, light from the second light source 16 is irradiated. The light passes through the light-penetrable original 13 and the second original platen 14 and reaches the third reflecting mirror 23. After this third reflecting mirror 23, the reflected light passes through the convergence lens 24 in the same manner as has been described earlier, and is irradiated to the image sensor and the scanning of the image is performed.

In this manner, according to the present embodiment, it is possible to easily switch the optical systems necessary for image scanning using the reflected light from the first original platen 12 and image scanning using the light that is transmitted through the second original platen 14.

FIG. 5 through FIG. 8 are views indicating a second embodiment according to the present invention.

This second embodiment is characterized by the second optical system being disposed outside the body casing 11. The remainder of the configuration is the same as the apparatus indicated for the first embodiment and so corresponding portions are indicated with the same numerals, and the corresponding description of them is omitted.

In this second embodiment, a second optical system 46 is mounted to one end of the first original platen 12 disposed so as to be horizontally movable at a position on the top of the outside of the body casing 11.

FIG. 7 and FIG. 8 respectively indicate specific example of the method of mounting. In the examples indicated in FIG. 7 and FIG. 8, the first original platen 12 is mounted with a cover 12a that rotates open and closed, and that covers the first original platen 12.

In the example indicated in FIG. 7, at one end of the cover 12a is fixed a box-shaped casing 47 and a second optical system 46 is disposed inside this box-shaped casing 47. One end of the first original platen 12 and the cover 12a are formed with long hole openings 48a and 48b through which light from the second optical system 46 passes.

In the example indicated in FIG. 8, from above one end of the first original platen 12 is fixed a light source casing 49 and the second optical system 46 is disposed inside this light source casing 49. Attaching and removing the light source casing 49 is performed by inserting a pair of pins 49a protruding into the bottom surface of the light source casing 49, into the pair of holes 12c provided at one end of the first original platen 12.

In this embodiment, when the image on a light-transmissive original 13 placed on the second original platen 14 is scanned, the light from the second optical system 46 is irradiated in the following manner. This is to say that as indicated in FIG. 6, the first original platen 12 is moved to the left, and the second optical system 46 is placed at a position directly above the third reflecting mirror 23. Then, while the light from the second optical system 46 is being irradiated, the second original platen 14 is moved horizontally as described earlier for the first embodiment. The light passes through the openings 48a and 48b and is irradiated to the light-penetrable original 13 and reading is performed for the image.

The second optical system 46 according to this embodiment and which requires a comparatively large amount of light can be placed on the outside of the body casing 11. By doing this, the space inside the body casing 11 can be made large even if the second optical system 46 is large, and the heat that is generated causes no adverse influence to the internal equipment.

FIG. 9 through FIG. 16 indicate a third embodiment of the present invention.

This embodiment is characterized by the light from the second light source being irradiated to outside of the main unit body casing, being collected by a convergence means and then irradiated again in the direction of the second original platen. The other portions of the configuration are the same as for the apparatus of the first and second embodiments and so corresponding portions are indicated with the same numerals, and the corresponding descriptions for them are omitted.

In this embodiment, second light sources 51 are disposed beneath a slit 11a in a body casing 11 and disposed in the direction of the slit 11a. In this embodiment, a pair of second light sources 51 are disposed one at each end of the side crossing the direction of movement of the second original platen 14.

As indicated in FIG. 12, the first original platen 12 has an opening 48b and closing cover 12a mounted to it, and at one end of this opening and closing cover 12a is fixed a box-shaped casing 52 that configures the light convergence means.

As indicated in FIG. 11, the box-shaped casing 52 is provided with light irradiation inlet openings 53 provided opposite the second light source 51, and a light irradiation outlet opening 54 through which light is irradiated in the direction of the second original platen 14. Then, inside the box-shaped casing 52 is also disposed a pair of reflecting mirrors 55 that reflect light irradiated in from the light irradiation inlet opening 53, to a position above the light irradiation outlet opening 54.

In addition, in the embodiment indicated in FIG. 11, a diffusion box 56 that diffuses the light, is disposed between the reflecting mirrors 55 and the light irradiation outlet opening 54. This diffusion box 56 has its inner surface painted with frosting so that light is easily diffused. On side surfaces opposite the reflecting mirrors 55 are provided with light path holes 56a and the bottom surface opposite the light irradiation outlet opening 54 is made of frosted glass 56b.

As indicated in FIG. 12, the first original platen 12 is provided with light transmissive holes 53a at positions opposing the light irradiation inlet openings 53. In addition, at a position opposing the light irradiation outlet opening 54 is provided a long hole opening 48b.

This embodiment operates as described below when light is irradiated to an light-transmissive original 13 on the second original platen 14. First, as indicated in FIG. 10, the first original platen 12 is moved to the left, and the convergence means 50 comes to a position directly above the third reflecting mirror 23. In this status, when light is irradiated from the second light sources 51, that light passes through the light irradiation inlet openings 53, is irradiated to inside the box-shaped casing 52, is then reflected by the reflecting mirror 55 and then enters the diffusion box 56. The light that is diffused inside the diffusion box 56 passes through the light irradiation outlet opening 54 and the long hole opening 48b and is then irradiated back into the body casing 11. Light is then irradiated to the second original platen 14 that passes in the horizontal direction underneath the light irradiation outlet opening 54.

The present embodiment differs from the previously described second embodiment in that the second light sources 51 are disposed inside the body casing 11. However, the convergence means 50 is used to converge the light from the second light sources 51 and to illuminate the second original platen 14 so that the second light sources 51 can be disposed at positions remote from a position immediately above the second original platen 14. Because of this, there is no increase in the size of the body casing 11 even if relatively large halogen lamps are used as the second light sources 51. In addition, it is also easy to prevent any adverse influences due to the generated heat by locating the second light sources 51 at positions at both ends of the body casing 11.

According to this embodiment, the second light sources are fixed and so when compared to the apparatus of the second embodiment, a moving cord for the second light source is not necessary. In addition, there is no movement and hence no vibration to cause an adverse influence to the light source.

FIG. 13 through FIG. 16 indicated another embodiment of the light convergence means. The light convergence means 50a indicated in FIG. 13 has a structure which is similar to the light convergence means 50 indicated in FIG. 11. In this light convergence means 50, the box-shaped casing 57 itself is the diffusion box. Inside this box-shaped casing 57 are disposed reflecting mirrors 55 in the same manner as for the embodiment indicated in FIG. 11.

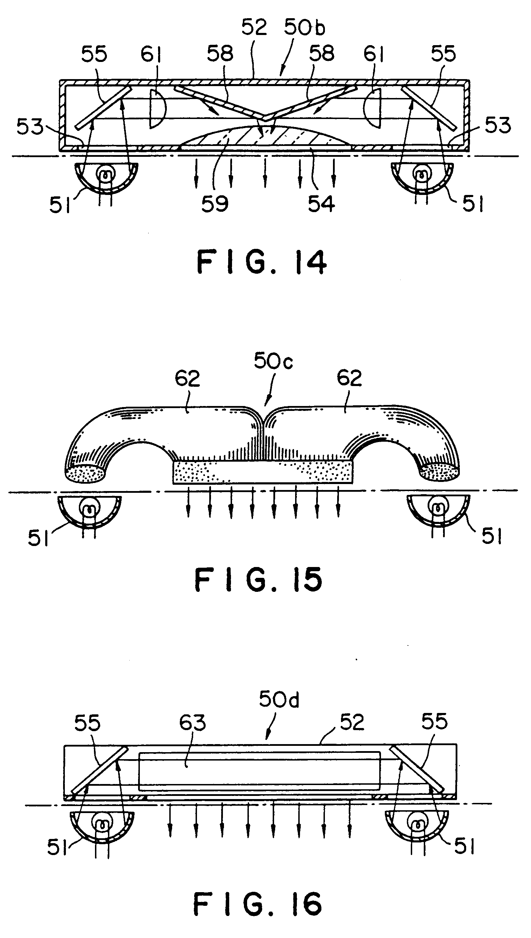

In the light convergence means 50b indicated in FIG. 14, are disposed second reflecting mirrors 58 between the reflecting mirrors 55 and the light irradiation outlet opening 54, and a converging lens 59 that converges the reflected light from this second reflecting mirror 58. In addition, there are also convex lenses 61 disposed between the reflecting mirrors 55 and the second reflecting mirrors 58.

According to the light convergence means 50b of this embodiment, it is possible to irradiate a more intense light in the direction of the second original platen 14.

In the light convergence means 50c indicated in FIG. 15, optical fibers 62 are disposed so as to connect the light irradiation inlet openings 53 and the light irradiation outlet opening 54 (Refer to FIG. 13 and FIG. 14).

In the light convergence means 50d indicated in FIG. 16, a fluorescent optical collector 63 is disposed so as to generate fluorescence between a pair of reflecting mirrors 55 inside the box-shaped casing 52.

FIG. 17 through FIG. 19 indicate a fourth embodiment according to the present invention. The apparatus according to this embodiment is characterized in that the first light source and the second light source share the same light source. The remainder of the configuration is the same as the apparatus indicated for the first through third embodiments and so corresponding portions are indicated with the same numerals, and the corresponding description of them is omitted.

In this embodiment, a pair of light sources 66 are movable between an attitude facing horizontally and an attitude facing upwards. This is to say that the light source 66 is mounted by a swinging pin (not shown) so as to be rotatable 90° to positions in both of the top ends in the body casing 11 (Refer to FIG. 18).

A first convergence means 67 is disposed so the light from the light sources 66 converges between the light sources 66 and the slit 11a and so that the light passing through the slit lla in the direction of the first original platen 12 is irradiated. In addition, to one end of the first original platen 12 is disposed a second light convergence means 50 having the same structure as the previously described embodiments so that the light from light sources is converged and is irradiated in the direction of the second original platen 14.

The first convergence means 67 has the sectional shape of a square box and is disposed so that the longitudinal direction thereof is horizontal and perpendicular to the direction of the movement of the first original platen 12. At both ends of the first convergence means 67 are provided light irradiation inlet openings 68 opposing the light source 66. In addition, at an upper portion of the first convergence means 67 are provided light irradiation outlet slit 69 that irradiates light in the direction of the slit 11a. The first convergence means 67 has the same internal structure as the light convergence means indicated in FIG. 11 and in FIG. 13 through FIG. 16.

The light convergence means 50 has the same structure as the light convergence means 50 of the previously described third embodiment and hence the description for it is omitted.

In this embodiment, the light sources 66 is rotated so as to irradiate light in the horizontal direction as indicated in FIG. 17, when an original on the first original platen 12 is scanned. The light that is irradiated from the light sources 66 is converged by the first convergence means 67, passes through the slit 11a and is irradiated to the first original platen 12.

When an original on the second original platen 14 is scanned, the light sources 66 are rotated so as to irradiate light in the upward direction, as indicated in FIG. 19. The light that is irradiated from the light sources 66 is converged by the light convergence means 50 and is irradiated to the second original platen 14 in the same manner as described earlier for the third embodiment.

According to the present embodiment, the first and the second light sources are the same so that it is possible to make the apparatus more compact.

FIG. 20 and FIG. 21 indicate a fifth embodiment according to the present invention. In an image scanning apparatus 100 according to this embodiment, a first original platen 112 is formed on and is fixed to a top surface of a body casing 110. This top surface is transparent to allow light to pass therethrough. Inside this body casing 110 are disposed first light sources 113 that irradiate light to a first original platen 112, and disposed beneath this first light sources 113 is a first reflecting mirror 114 that receives the reflected light from an original placed on the first original platen 112. The first light sources 113 and the reflecting mirror 114 are both mounted to a first unit 115 which can move horizontally.

At a position opposing the reflecting mirror 114 is disposed a second reflecting mirror 116 that reflects the light from the reflecting mirror 114, in the downward direction. Then, at a position below and opposing the second reflecting mirror 116 is disposed a third reflecting mirror 117. Then, these second reflecting mirror 116 and third reflecting mirror 117 are both mounted to a second unit 118 and move together with this second unit 118.

The light from a third reflecting mirror 117 passes through a convergence lens 24 in the same manners as in the embodiments described above and is irradiated to an image sensor 17.

Inside the body casing 110 is disposed a second light source 121 so that the light is irradiated in the horizontal direction. At a position opposing the second light source 121 is disposed a fourth reflecting mirror 122 which reflects the light from the second light source 121, in the downward direction.

At a position beneath the fourth reflecting mirror 122 is disposed a second original platen 123 so as to be movable in the horizontal direction. In addition, between the fourth reflecting mirror 122 and the second original platen 123 is disposed a diffusion plate 124 that diffuses the reflected light from the fourth reflecting mirror 122.

The second reflecting mirror 116 has an upper end portion linked to a swinging shaft 116a so that it can be swung around the pivot of the swinging shaft 116a. In the vicinity of the fourth reflecting mirror 122 is disposed a stopper 125 that the second reflecting mirror 116 is swung when it contacts this stopper 125.

The following is a description of the operation for scanning an original placed on the first original platen 112 of an apparatus according to this embodiment. In this case, as indicated in FIG. 20, the second reflecting mirror 116 is swung to a position indicated by the solid line, and the reflecting mirror 114, second reflecting mirror 116 and third reflecting mirror 117 form a path reflecting light into the convergence lens 24. Then, while the light from the first light sources 113 is being irradiated in the direction of the first original platen 112, the first light sources 113 and the reflecting mirror 114 are horizontally moved together with the first unit 115 along the lower surface of the first original platen 112. At the same time, the second reflecting mirror 116 and the third reflecting mirror 117 are moved along with the second unit 118 in the same direction. In this case, the optical length between the original and the image sensor 17 is maintained constant and so if the speed of movement of the first unit 115 is V, then the speed of movement of the second unit 118 becomes $\frac{V}{2}$.

By this action, the reflected light from the original on the first original platen 112 is irradiated to the image sensor 17 and the scanning of the image is performed.

The following is a description of the operation for scanning an original on a second original platen 123. In this case, the second unit 118 is first moved towards the fourth reflecting mirror 122 till the third reflecting mirror 117 comes to the position directly beneath the fourth reflecting mirror 122. In this case, the second reflecting mirror 116 contacts the stopper 125 and is swung to the left, as indicated in FIG. 21.

In this status, light is irradiated from the second light source 121 and is irradiated to the second original platen 123 via the fourth reflecting mirror 122 and the diffusion plate 124. Light is transmitted through the original on the second original platen 123 when the second original platen 123 is moved horizontally so as to cross the optical path formed by the fourth reflecting mirror 122 and the third reflecting mirror 117. This transmitted light passes through the convergence lens 24 and is irradiated to the image sensor 17 and the image scanning of the image on the original on the second original platen 123 is performed.

FIG. 22 and FIG. 23 are views indicating the configuration where the positions of the second reflecting mirror 116 and the fourth reflecting mirror 122 opposing the third reflecting mirror 117 are switched. The second reflecting mirror 116 is fixed to an inclined surface below the block 131 which is above it. In addition, the third reflecting mirror 117 is fixed to an inclined surface above a block 132 which is below it. The block 132 is fixed to one end of a base 133 and to the other end of the base 133 is fixed an upright column 134. To the upper end of the column 134 is a sliding bar 135 which is supported so as be slidably movable. To one end of this sliding bar 135 is fixed a block 131 and to the other end is fixed a stopper 135a. To the sliding bar 135 between the column 134 and the block 131 is fitted a coil spring 136 and to the central portion of the column 134 is formed a space 134 through which the second original platen 123 can pass through. Then, the column 134, base 133, block 131, block 132 and the sliding bar 135 configure the second unit 118.

FIG. 22 corresponds to FIG. 20, and indicates the status where image scanning is performed for an original placed on the first original platen 112 of this embodiment. This is to say that the block 131 is moved forward along with the sliding bar 135 by the action of the spring 136 and the second reflecting mirror 116 is at a position opposing the third reflecting mirror 117 and an optical path is formed by the second reflecting mirror 116 and the third reflecting mirror 117. In this status, the second unit 118 moves and the image is scanned.

FIG. 23 corresponds to FIG. 21, and indicates the status where image scanning is performed for an original placed on the second original platen 123 of this embodiment. This is to say that when the second unit 118 moves in the direction of the fourth reflecting mirror 122, the block 131 comes into contact with the stopper 125. The second unit 118 moves forward (to the right) along with the block 132 but the block 131 is held at the position where it is in contact with the stopper 125 because the sliding bar 135 slides the column 134. In this manner, the third reflecting mirror 117 is moved to a position directly below the fourth reflecting mirror 122 and the fourth reflecting mirror 122 and the third reflecting mirror 117 form an optical path. In this status, image scanning of an original on the second original platen 123 is performed as described earlier, when the second original platen 123 moves horizontally.

FIG. 24 and FIG. 25 indicate a sixth embodiment of the present invention.

The apparatus according to this embodiment is characterized in that the first light source and the second light source are the same. The remainder of the configuration is the same as the apparatus indicated for the fifth embodiment and so corresponding portions are indicated with the same numerals, and the corresponding description of them is omitted.

In this embodiment, a light source 131 is disposed in the vicinity of a first reflecting mirror 114 and is movable together with the reflecting mirror 114. On an underside of a top surface of a main unit body casing 110 at a position above the second original platen 123 is mounted a reflecting member 110a that diffusively reflects light.

In the apparatus according to the present embodiment, when image scanning is performed for an original placed on a first original platen 112, then in the status indicated in FIG. 24, the same operation as described earlier for the fifth embodiment is performed.

When an original placed on the second original platen 123 is scanned, it is scanned when the optical system is disposed as indicated in FIG. 25. The light from a light source 131 is first irradiated to the reflecting member 110a and the reflected light from the reflecting member 110a is irradiated onto the second original platen 123 via the reflected light mirror 114 and second reflecting mirror 116.

In this manner, according to the present embodiment, the optical system is shared and so it is possible to make the apparatus more compact when compared to the fifth embodiment.

## Claims

1. An apparatus for scanning an image, including a main unit body casing (11), a first original platen (12) disposed at the top of the main unit body casing upon which a first original may be placed, a light source (15,16) that irradiates light to said platen (12), an image sensor means (17) disposed inside the body casing (11), and optical means (20) for passing light from said first original placed on said first original platen (12) to the image sensor (17), wherein said light source comprises first irradiation means (15) disposed inside said main unit body casing for irradiating light onto said first original on said first original platen (12) and second irradiation means (16) for irradiating light in the downward direction onto a second original (13), said optical means (20) respectively passing reflected light from said first original and light transmitted through said second original (13), to said image sensor (17), said optical means (20) comprising:

    a first reflecting mirror (21) that reflects light reflected by said first original into a first optical path (20a) parallel to said horizontal direction;

    a second reflecting mirror (22) which reflects light reflected from said first reflecting mirror (21), in a direction perpendicular to said first optical path (20a);

    a third reflecting mirror (23) disposed so as to oppose the second reflecting mirror (22), and which reflects light reflected by said second reflecting mirror (22), into the second optical path (20b) extending in a direction opposite to and parallel to said first optical path (20a); and

    a converging lens (24) disposed along said second optical path (20b) between the third reflecting mirror (23) and the image sensor (17); characterised in that:

    the apparatus further comprises a second original platen (14) on which said second original may be placed; the top surface of the main body unit casing (11) is provided with a slit (11a), said first original platen (12) being disposed so as to be movable in a horizontal direction perpendicular to said slit (11a), said second original platen (14) being disposed so as to be movable in a horizontal direction inside said main unit body casing (11) to a position between said second irradiating means (16) and said third reflecting mirror (23);

    the first irradiation means (15) is disposed to irradiate light onto an original on said first original platen (12) via said slit (11a) and said second irradiation means (16) is disposed to irradiate light in a downward direction towards the second original platen (14);

    the optical means is arranged to pass reflected light from an original on the first original platen (12) or transmitted light from an original on the second original platen (14) to said image sensor (17);

    the first reflecting mirror (21) is mounted to one end of the second original platen (14);

    the second reflecting mirror (22) is provided with removing means so as to be movable with respect to the first reflecting mirror (21) between a position removed from the first optical path (20a) and a position on said first optical path; and

    the third reflecting mirror (23) is arranged to additionally reflect transmitted light from an original placed on said second original platen (14) into said second optical path (20b).

2. The apparatus according to claim 1 or 2, wherein; said second and third reflecting mirrors (22,23) are movable together in the horizontal direction.

3. The apparatus according to any preceding claim, wherein; said removing means (22a) comprises a shaft supporting the second reflecting mirror (22) so that it is pivotable, a lever (37) mounted perpendicularly to said shaft, and a contact member (42) mounted to one end of said second original platen (14), and pressing against said lever.

4. The apparatus according to claim 1, 2 or 3, wherein the first irradiation means comprises a first light source (15) and the second irradiation means comprises a second light source (16).

5. The apparatus according to claim 4, wherein; said second light source (16) is disposed within the body casing (11).

6. The apparatus according to claim 4, wherein; said second light source (46) is mounted on the first original platen (12) disposed outside of the body casing (11).

7. The apparatus according to claim 4, wherein; said second light source (51) is disposed so as to irradiate light upwards through the slit (11a) in the body casing (11), and converging means (50) are mounted on said first original platen to converge light irradiated from said second light source (51) and irradiate it towards said second original platen (14).

8. The apparatus according to claim 7, wherein; said converging means (50) comprises a box-shaped casing (52) in which are formed a light irradiation inlet opening (53) towards the second light source (51), a light irradiation outlet opening (54) that irradiates light towards the second original platen (14), and light reflecting means (55) disposed inside the casing and reflecting light irradiated from the light irradiation inlet opening (53), to a position above said light irradiation outlet opening (54).

9. The apparatus according to claim 8, wherein; inside said box-shaped casing (52) are disposed second light reflecting means (58) between said light reflecting means (55) and the light irradiation outlet opening (54), and converging means (59) to converge reflected light from said second light reflecting means (58).

10. The apparatus according to claim 8, wherein; inside said box-shaped casing (52) is disposed a fluorescence generation means (63) between said light reflecting means (55) and the light irradiation outlet opening (54).

11. The apparatus according to claim 8, wherein; inside said box-shaped casing (52) is disposed optical fibre means (62) between said light irradiation inlet openings (53) and the light irradiation outlet opening (54).

12. The apparatus of any of claims 1 to 3, wherein said light source (66) is disposed inside the main unit body casing (11) and has a variable direction of light irradiation, said first irradiation means comprising first convergence means (67) disposed inside the body casing (11), converging light from the light source (66) and irradiating it through said slit (11a) and in the direction of the first original platen (12) and said second irradiation means comprising second convergence means (50) disposed on said first original platen, converging light from said light source (66) and irradiating it towards said second original platen (14).

13. An apparatus (100) for scanning an image including a main unit body casing (110), a first original platen (112) upon which a first original may be placed, a light source (113,121) that irradiates light to said platen (112), an image sensor (17) disposed inside the body casing (110) and optical means (114,116,117,118 122) for passing light from said first original placed on said first original platen (112) to the image sensor (17), wherein: said main unit body casing (110) is provided with a transparent surface through which light can pass, said first original platen (112) is formed on said transparent surface of the main unit body casing (110), said light source (113,121) comprises a first light source (113) disposed inside the main unit body casing and so as to irradiate light through said transparent surface, onto said first original placed on the first original platen (112), a second light source (121) that irradiates light downwards in the direction of a second original said optical means (114,116,117,118,122) respectively passing reflected light from said first original and light transmitted through said second original to said image sensor (17), and said optical means (114,116,117,118,122) comprises a first optical means (114,116,118) disposed inside the main unit body casing to irradiate light reflected from said first original placed on the first original platen (112), to said image sensing means (17); characterised in that: the apparatus further comprises a second original platen (123) upon which said second original may be placed, said second original platen (123) being disposed so as to be movable in a horizontal direction inside the main body unit casing (110), the second light source (121) being disposed inside the main body unit casing (110) so as to irradiate light towards the second original platen; a second optical means (122,117) disposed inside the main unit body casing, to irradiate light transmitted through said second original placed on the second original platen (123), to said image sensor (17); and optical path blocking means (125) to block an optical path inside said first optical means, whereby when light transmitted through an original placed on the second original platen (123) is emitted by said second optical means (122,117) to said image sensor (17), the first optical path formed by said first optical means (114,116,118) is changed by the optical path blocking means (125) so as to block incursion of the first optical path into the second optical path.

**Patentansprüche**

1. Gerät zum Abtasten eines Bildes, aufweisend ein Haupteinheit-Aufbaugehäuse (11), eine Auflageplatte (12) für ein erstes Original, die an der Oberseite des Haupteinheit-Aufbaugehäuses angeordnet ist und auf die ein erstes Original plazierbar ist, eine Lichtquelle (15, 16), die Licht auf die Platte (12) strahlt, eine Bildsensoreinrichtung (17), die innerhalb des Aufbaugehäuses (11) angeordnet ist, und eine optische Einrichtung (20), die Licht vom auf die Platte (12) für das erste Original plazierten ersten Original zum Bildsensor (17) leitet, worin die Lichtquelle eine erste Ausstrahlungseinrichtung (15) aufweist, die innerhalb des Haupteinheit-Aufbaugehäuses angeordnet ist zur Ausstrahlung von Licht auf das erste Original auf der Platte (12) für das erste Original, und eine zweite Ausstrahlungseinrichtung (16) aufweist, die Licht in der Abwärtsrichtung auf ein zweites Original (13) ausstrahlt, wobei die optische Einrichtung (20) jeweils reflektiertes Licht vom ersten Original und Licht, das durch das zweite Original (13) hindurchgelassen ist, zum Bildsensor (17) leitet, wobei die optische Einrichtung (20) aufweist:

   einen ersten reflektierenden Spiegel (21), der Licht, das vom ersten Original reflektiert worden ist, auf einen ersten optischen Weg (20a) parallel zur horizontalen Richtung reflektiert;

   einen zweiten reflektierenden Spiegel (22), der vom ersten reflektierenden Spiegel (21) reflektiertes Licht in eine Richtung senkrecht zum ersten optischen Weg (20a) reflektiert;

   einen dritten reflektierenden Spiegel (23), der so angeordnet ist, daß er dem zweiten reflektierenden Spiegel (22) entgegengesetzt ist, und der vom zweiten reflektierenden Spiegel (22) reflektiertes Licht in den zweiten optischen Weg (20b) reflektiert, der sich in eine Richtung entgegengesetzt zu und parallel zum ersten optischen Weg (20a) erstreckt; und

   eine Sammellinse (24), die längs des zweiten optischen Weges (20b) zwischen dem dritten reflektierenden Spiegel (23) und dem Bildsensor (17) angeordnet ist;

   **dadurch gekennzeichnet**, daß:

   das Gerät ferner eine Auflageplatte (14) für ein zweites Original aufweist, auf der das zweite Original plazierbar ist;daß die Oberseite des Haupteinheit-Aufbaugehäuses (11) mit einem Schlitz (11a) versehen ist, daß die Platte (12) für das erste Original so angeordnet ist, daß sie in einer horizontalen Richtung senkrecht zu diesem Schlitz (11a) bewegbar ist, daß die Platte (14) für das zweite Original so angeordnet ist, daß sie in einer horizontalen Richtung innerhalb des Haupteinheit-Aufbaugehäuses (11) in eine Position zwischen der zweiten Ausstrahlungseinrichtung (16) und dem dritten reflektierenden Spiegel (23) bewegbar ist;

   die erste Ausstrahlungseinrichtung (15) so angeordnet ist, daß sie Licht auf ein Original auf der Platte (12) für das erste Original über den Schlitz (11a) strahlt, und die zweite Ausstrahlungseinrichtung (16) so angeordnet ist, daß sie Licht in einer Abwärtsrichtung zur Platte (14) für das zweite Original hin ausstrahlt;

   die optische Einrichtung so ausgelegt ist, daß sie reflektiertes Licht von einem Original auf der Platte (12) für das erste Original oder von einem Original auf der Platte (14) für das zweite Original hindurchgelassenes Licht zum Bildsensor (17) hin leitet;

   der erste reflektierende Spiegel (21) an einem Ende der Platte (14) für das zweite Original angebracht ist;

   der zweite reflektierende Spiegel (22) mit einer Entfernungseinrichtung derart versehen ist, daß er bezüglich des ersten reflektierenden Spiegels (21) zwischen einer aus dem ersten optischen Weg (20a) entfernten Stellung und einer Stellung auf diesem ersten optischen Weg bewegbar ist; und

   der dritte reflektierende Spiegel (23) so angeordnet ist, daß er zusätzlich durchgelassenes Licht von einem auf die Platte (14) für das zweite Original plazierten Original in den zweiten optischen Weg (20b) reflektiert.

2. Gerät nach Anspruch 1, in welchem der zweite und dritte reflektierende Spiegel (22, 23) in der horizontalen Richtung gemeinsam bewegbar sind.

3. Gerät nach einem vorhergehenden Anspruch, in welchem die Entfernungseinrichtung (22a) eine Welle, die den zweiten reflektierenden Spiegel (22) so haltert, daß er schwenkbar ist, einen Hebel (37), der senkrecht zur Welle angeordnet ist, und ein Kontaktteil (42) aufweist, das an einem Ende der Platte (14) für das zweite Original angebracht ist und gegen den Hebel drückt.

4. Gerät nach Anspruch 1, 2 oder 3, in welchem die erste Ausstrahlungseinrichtung eine erste Lichtquelle (15) und die zweite Ausstrahlungseinrichtung eine zweite Lichtquelle (16) aufweisen.

5. Gerät nach Anspruch 4, in welchem die zweite Lichtquelle (16) innerhalb des Aufbaugehäuses (11) angeordnet ist.

6. Gerät nach Anspruch 4, in welchem die zweite Lichtquelle (46) auf der Platte (12) für das erste Original angebracht ist, die außerhalb des Aufbaugehäuses (11) angeordnet ist.

7. Gerät nach Anspruch 4, in welchem die zweite Lichtquelle (51) so angeordnet ist, daß sie Licht durch den Schlitz (11a) im Aufbaugehäuse (11) aufwärts strahlt, und eine konvergierende Einrichtung (50) auf der Platte für das erste Original angebracht ist, um von der zweiten Lichtquelle (51) ausgestrahltes Licht zu konvergieren und es zur Platte (14) für das zweite Original hin zu strahlen.

8. Gerät nach Anspruch 7, in welchem die konvergierende Einrichtung (50) ein kastenförmiges Gehäuse (52) aufweist, in welchem eine Lichtstrahleneinlaßöffnung (53) zur zweiten Lichtquelle (51) hin, eine Lichtstrahlenauslaßöffnung (54), die Licht zur Platte (14) für das zweite Original hin ausstrahlt, und eine Lichtreflexionseinrichtung (55) ausgebildet sind, die innerhalb des Gehäuses angeordnet ist und Licht, das von der Lichtstrahleneinlaßöffnung (53) abgestrahlt wird, zu einer Position oberhalb der Lichtstrahlenauslaßöffnung (54) reflektiert.

9. Gerät nach Anspruch 8, in welchem innerhalb des kastenförmigen Gehäuses (52) eine zweite Lichtreflexionseinrichtung (58) zwischen der Lichtreflexionseinrichtung (55) und der Lichtstrahlenauslaßöffnung (54) und eine konvergierende Einrichtung (59) angeordnet sind, die reflektiertes Licht von der zweiten Lichtreflexionseinrichtung (58) konvergiert.

10. Gerät nach Anspruch 8, in welchem innerhalb des kastenförmigen Gehäuses (52) eine Fluoreszenzerzeugungseinrichtung (63) zwischen der Lichtreflexionseinrichtung (55) und der Lichtstrahlenauslaßöffnung (54) angeordnet ist.

11. Gerät nach Anspruch 8, in welchem innerhalb des kastenförmigen Gehäuses (52) eine Lichtleitfasereinrichtung (62) zwischen der Lichtstrahleneinlaßöffnung (53) und der Lichtstrahlenauslaßöffnung (54) angeordnet ist.

12. Gerät nach einem der Ansprüche 1 bis 3, in welchem die Lichtquelle (66) innerhalb des Haupteinheit-Aufbaugehäuses (11) angeordnet ist und eine variable Lichtabstrahlrichtung aufweist, die erste Ausstrahlungseinrichtung eine erste Konvergenzeinrichtung (67) aufweist, die innerhalb des Aufbaugehäuses (11) angeordnet ist und Licht von der Lichtquelle (66) konvergiert und dieses durch den Schlitz (11a) und in der Richtung der Platte (12) für das erste Original abstrahlt, und in welchem die zweite Ausstrahlungseinrichtung eine zweite Konvergenzeinrichtung (50) aufweist, die auf der Platte für das erste Original angeordnet ist, Licht von der Lichtquelle (66) konvergiert und dieses zur Platte (14) für das zweite Original hin abstrahlt.

13. Gerät (100) zum Abtasten eines Bildes, aufweisend ein Haupteinheit-Aufbaugehäuse (110), eine Platte (112) für ein erstes Original, auf der ein erstes Original plazierbar ist, eine Lichtquelle (113, 121), die Licht auf diese Platte (112) ausstrahlt, einen Bildsensor (17), der innerhalb des Aufbaugehäuses (110) angeordnet ist, und optische Einrichtungen (114, 116, 117, 118, 122), die Licht vom ersten Original, das auf die Platte (112) für das erste Original plaziert ist, zum Bildsensor (17) leiten, worin:

das Haupteinheit-Aufbaugehäuse (110) mit einer transparenten Oberfläche versehen ist, durch die Licht treten kann, die Platte (112) für das erste Original auf der transparenten Oberfläche des Haupteinheit-Aufbaugehäuses (110) ausgebildet ist, die Lichtquelle (113, 121) eine erste Lichtquelle (113) umfaßt, die innerhalb des Haupteinheit-Aufbaugehäuses angeordnet ist und so, daß sie Licht durch die transparente Oberfläche auf das erste Original strahlt, das auf der Platte (112) für das erste Original plaziert ist, ferner eine zweite Lichtquelle (121) aufweist, die Licht nach unten in die Richtung eines zweiten Originals abstrahlt, wobei die optischen Einrichtungen (114, 116, 117, 118, 122) jeweils reflektiertes Licht vom ersten Original bzw. Licht, das durch das zweite Original hindurchgelassen wurde, zum Bildsensor (17) leiten, und die optischen Einrichtungen (114, 116, 117, 118, 122) eine erste optische Einrichtung (114, 116, 118), die innerhalb des Haupteinheit-Aufbaugehäuses angeordnet ist, um Licht, das von dem ersten Original reflektiert wurde, das auf der Platte (112) für das erste Original plaziert ist, zur Bildsensoreinrichtung (17) hin abzustrahlen, aufweisen, **dadurch gekennzeichnet**, daß:

das Gerät ferner eine Platte (123) für ein zweites Original aufweist, auf die das zweite Original plazierbar ist, wobei die Platte (123) für das zweite Original so angeordnet ist, daß sie innerhalb des Haupteinheit-Aufbaugehäuses (110) in einer horizontalen Richtung bewegbar ist, wobei die zweite Lichtquelle (121) innerhalb des Haupteinheit-Aufbaugehäuses (110) so angeordnet ist, daß sie Licht zur Platte für das zweite Original hin abstrahlt;

eine zweite optische Einrichtung (122, 117) innerhalb des Haupteinheit-Aufbaugehäuses so angeordnet ist, daß sie durch das zweite Original, das auf die Platte (123) für das zweite Original plaziert ist, hindurchgelassenes Licht zum Bildsensor (17) abstrahlt; und

daß eine einen optischen Weg blockierende Einrichtung (125) zur Blockierung eines optischen Weges innerhalb der ersten optischen Einrichtung vorgesehen ist, wodurch, wenn Licht, das durch ein auf der Platte (123) für das zweite Original plaziertes Original hindurchgelassen ist, von der zweiten optischen Einrichtung (122, 117) auf den zweiten Bildsensor (17) emittiert wird, der erste optische Weg, der von der ersten optischen Einrichtung (114, 116, 118) ausgebildet wird, durch die den optischen Weg blockierende Einrichtung (125) so geändert wird, daß ein Einfall des ersten optischen Weges in den zweiten optischen Weg blockiert ist.

**Revendications**

1. Appareil pour balayer une image, comportant un boîtier de corps d'unité principale (11), une platine de premier original (12) placée au-dessus du boîtier de corps d'unité principale, sur laquelle un premier original peut être placé, une source lumineuse (15, 16) qui irradie de la lumière vers ladite platine (12), un moyen capteur d'image (17) placé à l'intérieur du boîtier de corps (11), et des moyens optiques (20) pour transmettre la lumière entre ledit premier original placé sur ladite platine de premier original (12) et le capteur d'image (17), dans lequel ladite source lumineuse comprend des premiers moyens d'irradiation (15) placés à l'intérieur dudit boîtier de corps d'unité principale, pour irradier de la lumière sur ledit premier original situé sur ladite platine de premier original (12), et des seconds moyens d'irradiation (16) pour irradier vers le bas de la lumière sur un second original (13), lesdits moyens optiques (20) transmettant respectivement la lumière réfléchie par ledit premier original et la lumière transmise à travers ledit second original (13), vers ledit capteur d'image (17), lesdits moyens optiques (20) comprenant:

un premier miroir réfléchissant (21), qui réfléchit la lumière réfléchie par ledit premier original, sur un premier chemin optique (20a) parallèle à ladite direction horizontale;

un deuxième miroir réfléchissant (22), qui réfléchit la lumière réfléchie par ledit premier miroir réfléchissant (21), dans une direction perpendiculaire audit premier chemin optique (20a);

un troisième miroir réfléchissant (23), placé de façon à être opposé au deuxième miroir réfléchissant (22), et qui réfléchit la lumière réfléchie par ledit deuxième miroir réfléchissant (22), sur le second chemin optique (20b) s'étendant dans une direction opposée et parallèle audit premier chemin optique (20a); et

une lentille convergente (24) placée le long dudit second chemin optique (20b), entre le troisième miroir réfléchissant (23) et le capteur d'image (17); caractérisé en ce que:

l'appareil comprend en outre une platine de second original (14), sur laquelle ledit second original peut être placé; la surface supérieure du boîtier de corps d'unité principale (11) est pourvue d'une fente (11a), ladite platine de premier original (12) étant placée de façon à pouvoir être déplacée dans une direction horizontale perpendiculaire à ladite fente (11a), ladite platine de second original (14) étant placée de façon à pouvoir être déplacée dans une direction horizontale à l'intérieur dudit boîtier de corps d'unité principale (11), vers une position située entre lesdits seconds moyens d'irradiation (16) et ledit troisième miroir réfléchissant (23);

les premiers moyens d'irradiation (15) sont placés de façon à irradier de la lumière sur un original situé sur ladite platine de premier original (12), par l'intermédiaire de ladite fente (11a), et lesdits seconds moyens d'irradiation (16) sont placés de façon à irradier de la lumière vers le bas, vers la platine de second original (14);

les moyens optiques sont disposés de façon à transmettre la lumière réfléchie par un original situé sur la platine de premier original (12), ou la lumière transmise depuis un original situé sur la platine de second original (14), vers ledit capteur d'image (17);

le premier miroir réfléchissant (21) est monté à une extrémité de la platine de second original (14);

le deuxième miroir réfléchissant (22) est pourvu de moyens de retrait de façon à pouvoir être déplacé par rapport au premier miroir réfléchissant (21), entre une position retirée du premier chemin optique (20a) et une position située sur ledit premier chemin optique; et

le troisième miroir réfléchissant (23) est disposé de façon à réfléchir de plus, la lumière transmise par un original placé sur ladite platine de second original (14) située dans ledit second chemin optique (20b).

2. Appareil selon la revendication 1 ou 2, dans lequel;

lesdits deuxième et troisième miroirs réfléchissants (22, 23), peuvent être déplacés ensemble dans la direction horizontale.

3. Appareil selon l'une quelconque des revendications précédentes, dans lequel;
lesdits moyens de retrait (22a) comprennent un arbre soutenant le deuxième miroir réfléchissant (22), de façon qu'il puisse pivoter, un levier (37) monté perpendiculairement audit arbre, et un élément de contact (42) monté à une extrémité de ladite platine de second original (14), et poussant contre ledit levier.

4. Appareil selon la revendication 1, 2 ou 3, dans lequel les premiers moyens d'irradiation comprennent une première source lumineuse (15), et les seconds moyens d'irradiation comprennent une seconde source lumineuse (16).

5. Appareil selon la revendication 4, dans lequel;
ladite seconde source lumineuse (16) est placée à l'intérieur du boîtier de corps (11).

6. Appareil selon la revendication 4, dans lequel;
ladite seconde source lumineuse (46) est montée sur la platine de premier original (12) située à l'extérieur du boîtier de corps (11).

7. Appareil selon la revendication 4, dans lequel;
ladite seconde source lumineuse (51) est placée de façon à irradier la lumière vers le haut par la fente (11a) située dans le boîtier de corps (11), et des moyens de convergence (50) sont montés sur ladite platine de premier original, pour faire converger la lumière irradiée par ladite seconde source lumineuse (51), et pour l'irradier vers ladite platine de second original (14).

8. Appareil selon la revendication 7, dans lequel;
lesdits moyens de convergence (50) comprennent un boîtier en forme de boîte (52), dans lequel sont formées une ouverture d'entrée d'irradiation de lumière (53) vers la seconde source lumineuse (51), une ouverture de sortie d'irradiation de lumière (54), qui irradie la lumière vers la platine de second original (14), et des moyens réfléchissant la lumière (55) placés à l'intérieur du boîtier et réfléchissant la lumière irradiée par l'ouverture d'entrée d'irradiation de lumière (53), vers une position située au dessus de ladite sortie d'irradiation de lumière (54).

9. Appareil selon la revendication 8, dans lequel;
à l'intérieur dudit boîtier en forme de boîte (52), sont disposés des seconds moyens réfléchissant la lumière (58) entre lesdits moyens réfléchissant la lumière (55) et l'ouverture de sortie d'irradiation de lumière (54), et des moyens de convergence (59), pour faire converger la lumière réfléchie par lesdits seconds moyens réfléchissant la lumière (58).

10. Appareil selon la revendication 8, dans lequel;
à l'intérieur dudit boîtier en forme de boîte (52), sont disposés des moyens de génération de fluorescence (63), entre lesdits moyens réfléchissant la lumière (55) et l'ouverture de sortie d'irradiation de lumière (54).

11. Appareil selon la revendication 8, dans lequel;
à l'intérieur dudit boîtier en forme de boîte (52), sont disposés des moyens de fibres optiques (62), entre lesdites ouvertures d'entrée d'irradiation de lumière (53) et l'ouverture de sortie d'irradiation de lumière (54).

12. Appareil selon l'une quelconque des revendications 1 à 3, dans lequel
ladite source lumineuse (66) est placée à l'intérieur du boîtier de corps d'unité principale (11), et présente une direction d'irradiation de lumière variable, lesdits premiers moyens d'irradiation comprenant des premiers moyens de convergence (67) placés à l'intérieur du boîtier de corps (11), faisant converger la lumière provenant de la source lumineuse (66), et l'irradiant par ladite fente (11a) et dans la direction de la platine de premier original (12), et lesdits seconds moyens d'irradiation comprenant des seconds moyens de convergence (50) placés à l'intérieur de ladite platine de premier original, faisant converger la lumière provenant de ladite source lumineuse (66), et l'irradiant vers ladite platine de second original (14).

13. Appareil (100) pour balayer une image, comportant un boîtier de corps d'unité principale (110), une platine de premier original (112), sur laquelle un premier original peut être placé, une source lumineuse (113, 121) qui irradie de la lumière vers ladite platine (112), un capteur d'image (17) placé à l'intérieur du boîtier de corps (110), et des moyens optiques (114, 116, 117, 118, 122) pour transmettre la lumière entre ledit premier original placé sur ladite platine de premier original (112) et ledit capteur d'image (17), dans lequel:
ledit boîtier de corps d'unité principale (110) est pourvu d'une surface transparente à travers laquelle la lumière peut passer, ladite platine de premier original (112) est formée sur ladite surface transparente du boîtier de corps d'unité principale (110), ladite source lumineuse (113, 121) comprend une première source lumineuse (113) placée à l'intérieur du boîtier de corps d'unité principale, et de façon à irradier la lumière à travers ladite surface transparente, sur ledit premier original placé sur la platine de premier original (112), une seconde source lumineuse (121) qui irradie la lumière vers le bas, dans la direction dudit moyen optique d'un second original (114, 116, 117, 118, 122), transmettant respectivement la lumière réfléchie par ledit premier original, et la lumière transmise par ledit second original, vers ledit capteur d'image (17), et lesdits moyens optiques (114, 116, 117, 118, 122) comprennent un premier moyen optique (114, 116, 118) placé à l'intérieur du boîtier de corps d'unité principale, pour irradier la lumière réfléchie par ledit premier original placé sur la platine de premier original (112), vers lesdits moyens capteurs d'image (17); caractérisé en ce que:

l'appareil comprend en outre une platine de second original (123) sur laquelle ledit second original peut être placé, ladite platine de second original (123) étant disposée de façon à pouvoir être déplacée dans une direction horizontale à l'intérieur dudit boîtier de corps d'unité principale (110), la seconde source lumineuse (121) étant disposée à l'intérieur du boîtier de corps d'unité principale (110) de façon à irradier la lumière vers la platine de second original;

des seconds moyens optiques (122, 117), placés à l'intérieur du boîtier de corps d'unité principale, pour irradier la lumière transmise par ledit second original placé sur la platine de second original (123), vers ledit capteur d'image (17); et

des moyens de blocage de chemin optique (125) pour bloquer un chemin optique à l'intérieur desdits premiers moyens optiques, de façon que, lorsque la lumière transmise à travers un original placé sur la platine de second original (123) est émise par lesdits seconds moyens optiques (122, 117) vers ledit capteur d'image (17), le premier chemin optique formé par lesdits premiers moyens optiques (114, 116, 118) est modifié par les moyens de blocage de chemin optique (125) de façon à bloquer l'incursion du premier chemin optique dans le second chemin optique.

F I G. 1

F I G. 2

FIG. 3

FIG. 4A

FIG. 4B

FIG. 4C

FIG. 5

FIG. 6

FIG. 7

FIG. 8

# FIG. 9

# FIG. 10

# FIG. 11

F I G. 12

F I G. 13

F I G. 14

F I G. 15

F I G. 16

EP 0 410 703 B1

FIG. 17

FIG. 18

FIG. 19

23

F I G. 20

F I G. 21

FIG. 22

FIG. 23

FIG. 24

FIG. 25